(19) Europäisches Patentamt
European Patent Office
Office européen des brevets

(11) **EP 3 194 894 B1**

(12) **EUROPÄISCHE PATENTSCHRIFT**

(45) Veröffentlichungstag und Bekanntmachung des Hinweises auf die Patenterteilung:
**19.12.2018 Patentblatt 2018/51**

(21) Anmeldenummer: **15756625.8**

(22) Anmeldetag: **27.08.2015**

(51) Int Cl.:
*G01D 5/20* (2006.01)   *G01D 5/22* (2006.01)

(86) Internationale Anmeldenummer:
**PCT/EP2015/069577**

(87) Internationale Veröffentlichungsnummer:
**WO 2016/041754 (24.03.2016 Gazette 2016/12)**

(54) **ELEKTRISCHE SIGNALEINGABEVORRICHTUNG MIT KONVERGIERENDEN ODER DIVERGIERENDEN SCHWINGKREISSIGNALEN**

ELECTRIC SIGNAL INPUT APPARATUS

DISPOSITIF D'ENTRÉE DE SIGNAUX AVEC SIGNAUX DE CIRCUITS OSCILLANTS CONVERGENTS OU DIVERGENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2014 DE 102014013975**

(43) Veröffentlichungstag der Anmeldung:
**26.07.2017 Patentblatt 2017/30**

(73) Patentinhaber: **KNORR-BREMSE Systeme für Nutzfahrzeuge GmbH**
**80809 München (DE)**

(72) Erfinder:
• **RÖTHER, Friedbert**
**74389 Cleebronn (DE)**
• **SCHMAUDER, Thilo**
**71732 Tamm (DE)**
• **SCHABINGER, Simon**
**75245 Neulingen (DE)**
• **WÖRNER, Ralf**
**75233 Tiefenbronn (DE)**
• **HUBER, Christoph**
**80333 München (DE)**

(56) Entgegenhaltungen:
EP-A1- 1 289 147    DE-A1- 10 222 618
DE-A1-102007 052 162    DE-A1-102009 044 820

**Beschreibung**

Stand der Technik

Die Erfindung geht aus von einer elektrischen Signaleingabevorrichtung für ein Fahrzeug zum Erzeugen eines einen Betätigungsgrad eines Betätigungsorgans repräsentierenden Betätigungssignals, welche wenigstens Folgendes beinhaltet: Das Betätigungsorgan, eine in einem Gehäuse angeordnete induktive Sensoreinrichtung mit einer Magnetspulenanordnung beinhaltend wenigstens eine von Wechselstrom durchflossene Magnetspule, wenigstens einem im Gehäuse beweglich gelagerten, in die wenigstens eine Magnetspule ein- und austauchbarer Tauchkörper, wobei die Induktivität der wenigstens einen Magnetspule abhängig von der Eintauchtiefe des Tauchkörpers in die wenigstens eine Magnetspule variiert, sowie mit einer mit der wenigstens einen Magnetspule in elektrischem Kontakt stehende Auswerteelektronik, wobei der wenigstens eine Tauchkörper mit dem Betätigungsorgan derart in Wirkverbindung steht, dass die Eintauchtiefe des Tauchkörpers in die wenigstens eine Magnetspule abhängig von einem Betätigungsgrad des Betätigungsorgans ist, gemäß dem Oberbegriff von Anspruch 1. Eine solche Signaleingabevorrichtung ist aus der DE102007052162 A1 bekannt.

Wird daher das Betätigungsorgan betätigt, so taucht der Tauchkörper in die wenigstens eine wechselstromdurchflossene Magnetspule ein. Durch das Eintauchen des Tauchkörpers in die wenigstens eine Magnetspule wird deren Induktivität verändert, von welcher auf die Lage des Tauchkörpers und damit auf die Lage des Betätigungsorgans geschlossen werden kann. Die Induktivität der wenigstens einen Magnetspule wird durch Verstimmung der Resonanzfrequenz in einem Schwingkreis gemessen. Die Verstimmung und damit der veränderte Spannungsabfall an der Magnetspule ist dann ein Maß für die Position des Betätigungsorgans und die Spannungsänderung ein Maß für die Betätigungsgeschwindigkeit, mit welcher das Betätigungsorgan betätigt wird.

Eine solche, dort als Betriebsbremspedaleinrichtung ausgebildete elektrische Signaleingabevorrichtung mit einem Fußbremspedal als Betätigungsorgan ist beispielsweise aus Fig.4 der DE 198 52 399 A1 bekannt. Bei solchen Betriebsbremspedaleinrichtungen ist es entscheidend, dass das Betätigungssignal möglichst genau mit der über den Betätigungsgrad des Fußbremspedals vorgegebenen Bremsanforderung übereinstimmt und sich in Bezug zu dem Betätigungsgrad linear verhält.

Der vorliegenden Erfindung liegt die Aufgabe zugrunde, eine Signaleingabevorrichtung der eingangs erwähnten Art derart fortzubilden, dass das ausgesteuerte Betätigungssignal möglichst genau dem Betätigungsgrad des Betätigungsorgans entspricht. Insbesondere soll der Einfluss von Störeinflüssen auf das Betätigungssignal möglichst gering sein.

Diese Aufgabe wird erfindungsgemäß durch die Merkmale von Anspruch 1 gelöst.

Offenbarung der Erfindung

Erfindungsgemäß ist vorgesehen, dass wenigstens zwei koaxial hintereinander angeordnete Magnetspulen derart vorgesehen sind, dass bei einer Betätigung des Betätigungsorgans ausgehend von einer keine Betätigung repräsentierenden Ausgangslage in eine einen gewissen Betätigungsgrad repräsentierende Betätigungslage der wenigstens eine Tauchkörper aus einer Magnetspule wenigstens teilweise austaucht und in die sich an die eine Magnetspule axial anschließende Magnetspule wenigstens teilweise eintaucht, und dass wenigstens zwei der Magnetspulen in jeweils einen eigenen, jeweils ein eigenes Schwingkreissignal liefernden Schwingkreis geschaltet sind, und die dann wenigstens zwei Schwingkreise und/oder der wenigstens eine Tauchkörper derart ausgebildet ist (sind), dass mit sich änderndem Betätigungsgrad des Betätigungsorgans das Schwingkreissignal eines Schwingkreises in Bezug auf das Schwingkreissignal des anderen Schwingkreises divergiert oder konvergiert, wobei die Auswerteelektronik auf der Basis der Schwingkreissignale der wenigstens zwei Schwingkreise das Betätigungssignal erzeugt.

Bedingt durch den konvergierenden oder divergierenden Verlauf der beiden Schwingkreissignale in einem Diagramm in welchem sie beispielsweise gegenüber dem Betätigungsgrad wie Betätigungsweg oder Betätigungswinkel des Betätigungsorgans angetragen sind, insbesondere zwischen einer keine Betätigung repräsentierenden Ausgangsstellung bis zu einer eine maximalen Betätigung repräsentierenden Endstellung, können gleichsinnig mit an- oder absteigender Betätigung des Betätigungsorgans auf die Schwingkreissignale bzw. das Betätigungssignal wirkende Störeinflüsse eliminiert werden. Denn das Betätigungssignal wird auf der Basis beider konvergierenden bzw. divergierenden Schwingkreissignale gebildet.

Durch die in den Unteransprüchen aufgeführten Maßnahmen sind vorteilhafte Weiterbildungen und Verbesserungen der in Anspruch 1 angegebenen Erfindung möglich.

Besonders bevorzugt ist (sind) das die wenigstens zwei Schwingkreise und/oder der wenigstens eine Tauchkörper zusätzlich derart ausgebildet, dass die Schwingkreissignale der Schwingkreise überscheidungsfrei oder überkreuzungsfrei sind. Überkreuzungsfrei bzw. überschneidungsfrei bedeutet, dass sich in einem Diagramm über dem Betätigungsgrad wie Betätigungsweg oder Betätigungswinkel des Betätigungsorgans aufgetragenen Schwingkreissignale nicht überscheiden oder überkreuzen. Dann ist eine Verwechslung der beiden Schwingkreissignale bei der Auswertung ausgeschlossen.

Der divergierende oder konvergierende und/oder der überschneidungsfreie oder überkreuzungsfreie Verlauf der Schwingkreissignale der wenigstens zwei Schwingkreise wird bevorzugt abhängig von wenigstens einem Parameter der folgenden Parameter erzielt: Die Anzahl der Windungen auf den Magnetspulen, die Anzahl der Windungslagen der Windungen auf den Magnetspulen, die Länge des Spulendrahtes der Magnetspulen, die Kapazität der Kondensatoren der Schwingkreise, die Durchmesser der Magnetspulen, die axiale Länge der Magnetspulen, die Kontur oder der Querschnittsverlauf des wenigstens einen Tauchkörpers.

Mit anderen Worten wird wenigstens einer der oben genannten, die wenigstens beiden Magnetspulen betreffenden Parameter bei den wenigstens beiden Magnetspulen unterschiedlich ausgeführt, so dass sich die gewünschte Charakteristik des divergierenden oder konvergierenden und/oder der überscheidungsfreien oder überkreuzungsfreien Verlaufs der Schwingkreissignale ergibt. Zusätzlich oder alternativ kann auch die Geometrie des Tauchkörpers entsprechend ausgeführt werden, beispielsweise durch einen entsprechenden Querschnittsverlauf bezogen auf den Ein- oder Austauchweg des Tauchkörpers.

Wie beim Stand der Technik beinhaltet ein Schwingkreis wenigstens eine Kapazität wie einen Kondensator und wenigstens eine Magnetspule. Dann beruhen die Schwingkreissignale der wenigstens zwei Schwingkreise auf der bedingt durch die Bewegung des Tauchkörpers veränderten Induktivität $L$ der betreffenden Magnetspule und/oder auf der dadurch veränderten Frequenz $f$ des betreffenden Schwingkreises. Der Tauchkörper kann dabei elektrisch leitend und/oder ferromagnetisch sein, je nachdem ob der das von den Magnetspulen erzeugte magnetische Feld stärken oder schwächen soll.

Gemäß einer Weiterbildung weist die Auswerteelektronik wenigstens zwei Mikroprozessoren auf, wobei jedem Schwingkreis ein eigener Mikroprozessor zugeordnet ist, welcher das betreffende Schwingkreissignal auswertet. Dann ist eine Redundanz für den Fall vorhanden, dass ein Mikroprozessor ausfällt. Alternativ könnten auch beide Schwingkreissignale der beiden Schwingkreise auch von lediglich einem einzigen Mikroprozessor der Auswerteelektronik ausgewertet werden.

Besonders bevorzugt weist der Tauchkörper eine im Wesentlichen (rotations-) symmetrische Außenoberfläche auf, wobei ein Rand seines Endes, welches von der anderen Magnetspule weg weist nach Art einer Fase ausgebildet ist. Fase bedeutet in diesem Zusammenhang, dass der Rand des Endes im Querschnitt gesehen eine Abschrägung aufweist.

Da dieser in einer beispielsweise Gebrauchslage der Signaleingabevorrichtung gesehen, in welcher eine Mittelachse der Magnetspulen im Wesentlichen vertikal angeordnet und die eine Magnetspule eine obere Magnetspule und die andere Magnetspule eine untere Magnetspule ist, dann obere Rand des Tauchkörpers bei einer beginnenden Betätigung des Betätigungsorgans in die eine, dann obere Magnetspule eintaucht, wird die Kennlinie (Betätigungsgrad-Schwingkreissignal) des diese eine Magnetspule beinhaltenden Schwingkreises im Bereich eines Beginns oder Anfangs der Kennlinie linearisiert. Demgegenüber bleibt die Kennlinie des die andere Magnetspule beinhaltenden Schwingkreises weitgehend unbeeinflusst, da das obere Ende des Tauchkörpers auch bei maximaler Betätigung des Betätigungsorgans nicht in die andere Magnetspule eintaucht.

Zu einer Linearisierung der Kennlinien der Schwingkreissignale trägt gemäß einer Weiterbildung auch bei, dass bezogen auf die oben beschriebene Gebrauchslage in der Ausgangslage des Betätigungsorgans der nach Art einer Fase ausgebildete obere Rand des Tauchkörpers wenigstens teilweise unterhalb eines oberen Endes der oberen Magnetspule und das untere Ende des Tauchkörpers unterhalb des unteren Endes der oberen Magnetspule, aber oberhalb eines oberen Endes der unteren Magnetspule angeordnet ist. Weiterhin ist dann in einer einen maximalen Betätigungsgrad repräsentierenden Betätigungslage des Betätigungsorgans der nach Art einer Fase ausgebildete obere Rand des Tauchkörpers wenigstens teilweise oberhalb des unteren Endes der oberen Magnetspule und das untere Ende des Tauchkörpers oberhalb des unteren Endes der unteren Magnetspule angeordnet.

Bevorzugt weist die Auswerteelektronik wenigstens zwei Mikroprozessoren auf, wobei jedem Schwingkreis ein eigener Mikroprozessor zugeordnet ist, welcher das zugeordnete Schwingkreissignal oder die Schwingkreissignale aller Schwingkreise auswertet.

Um eine Abschirmung gegenüber elektromagnetischen Feldern zu erzielen, ist das das Gehäuse und insbesondere ein eigenes Elektronikgehäuse für die Auswerteelektronik bevorzugt aus einem elektrisch leitenden Material wie beispielsweise aus Aluminium gefertigt.

Die Magnetspulen sind beispielsweise auf wenigstens einen Spulenkörper der Magnetspulenanordnung gewickelt, wobei der wenigstens eine Spulenkörper aus PBT (Polybutylenterephthalat), aus PPS (Polyphenylensulfid) oder aus POM (Polyoxymethylen) besteht. Diese Materialien haben eine geringe Tendenz, Wasser aufzunehmen, was feuchtigkeitsbedingte parasitäre Kapazitäten, welche zu Signaländerungen führen können, vermeiden lässt.

Gemäß einer Weiterbildung ist die Magnetspulenanordnung bestehend aus Magnetspulen und Magnetspulenkörper einem den Tauchkörper wenigstens axial führenden Führungskörper und einem Gehäuseabschnitt axial zwischengeordnet, wobei zwischen der Magnetspulenanordnung und dem Führungskörper oder dem gehäuseabschnitt eine axial wirksame Federanordnung angeordnet ist, welche aus paramagnetischem Material besteht. Die Federanordnung übt dann auf die Magnetspulenanordnung zum einen eine gewisse Vorspannkraft aus, beispielsweise um Axialtoleranzen auszugleichen. Zum andern schirmt die Federanordnung die Magnetspulenanordnung aber auch gegenüber äußeren (Stör-)Magnetfeldern ab.

Besonders bevorzugt wird der Tauchkörper zumindest teilweise durch einen im Gehäuse und insbesondere durch den Führungskörper geführten Stößel gebildet, welcher durch das Betätigungsorgan direkt oder indirekt betätigt wird. Der Stößel bildet dann den wenigstens teilweise den in die Spulenöffnung eintauchenden Tauchkörper, der zusammen mit den auf den Spulenkörper gewickelten Magnetspulen deren Induktivität als Messprinzip beeinflusst.

Ganz besonders bevorzugt ist die elektrische Signaleingabevorrichtung gemäß der Erfindung Teil einer Betriebspedalbremseinrichtung einer elektro-pneumatischen oder elektrischen Bremseinrichtung eines Fahrzeugs. Dort bildet dann die elektrische Signaleingabevorrichtung den elektrischen Kanal der rein elektrischen oder elektro-pneumatischen Betriebspedalbremseinrichtung aus, welche auch Fußbremsmodul (FBM) genannt wird.

Bei rein elektrischen Betriebsbremseinrichtungen erzeugt dann der elektrische Kanal, der durch die elektrische Signaleingabevorrichtung gemäß der Erfindung gebildet wird, abhängig von einer Betätigung des Betriebsbremspedals als Betätigungsorgan ein elektrisches Betriebsbremsanforderungssignal für wenigstens einen elektrischen Bremskreis, welches in ein elektronisches Bremssteuergerät eingesteuert wird, das abhängig von dem Betriebsbremsanforderungssignal Stellbefehle für elektrische Bremsaktuatoren erzeugt.

Bei elektro-pneumatischen Betriebsbremseinrichtungen ist indes ein vorrangiger elektro-pneumatischer Betriebsbremskreis vorhanden, welchem ein elektrischer Kanal der Betriebsbremspedaleinrichtung bzw. Fußbremsmoduls (FBM) zugeordnet ist, d.h. mit Betätigung des Betriebsbremspedals erzeugt die in der Betriebsbremspedaleinrichtung angeordnete induktive Sensoreinrichtung zusammen mit der Auswerteelektronik ein elektrisches Betriebsbremsanforderungssignal, welches in ein elektronisches Bremssteuergerät eingesteuert wird, um durch eine entsprechende Ansteuerung von Magnetventilen bzw. Druckregelmodulen einen dem Betriebsbremsanforderungssignal entsprechenden pneumatischen Bremsdruck in pneumatische Betriebsbremszylinder einzusteuern. Parallel hierzu bewirkt die Betätigung des Betriebsbremspedals, dass der mit diesem verbundene Stößel, von dem bevorzugt wenigstens ein Abschnitt den Tauchkörper bildet, über eine Druckfederanordnung einen Ventilkolben betätigt, welcher wiederum ein Doppelsitzventil der Betriebsbremspedaleinrichtung steuert, um einen der Bremsanforderung entsprechenden pneumatischen Steuerdruck in wenigstens einem pneumatischen Kanal der Betriebsbremspedaleinrichtung zu erzeugen, der dann in nachrangigen, rein pneumatischen Betriebsbremskreisen einen Bremsdruck in den Bremszylindern bilden, wenn der vorrangige elektro-pneumatische Betriebsbremskreis aufgrund eines Defekts ausgefallen ist.

Die Erfindung umfasst daher auch eine elektropneumatische oder elektrische Fahrzeugeinrichtung eines Fahrzeugs beinhaltend eine oben beschriebene elektrische Signaleingabevorrichtung sowie ein Fahrzeug beinhaltend eine solche elektro-pneumatische oder elektrische Bremseinrichtung.

Alternativ könnte die elektrische Signaleingabevorrichtung auch Teil einer Gaspedaleinrichtung mit einem Gaspedal oder einer Kupplungspedaleinrichtung mit einem Kupplungspedal sein, wobei der Betätigungsgrad des jeweiligen Pedals dann mittels der elektrischen Signaleingabevorrichtung gemessen wird.

Die Fahrzeugeinrichtung ist dann beispielsweise eine Parkbremseinrichtung mit einer Hand- oder Fußbedieneinrichtung als Signaleingabevorrichtung sowie einem Fußpedal- oder einem Handbetätigungsorgan als Betätigungsorgan, eine Kupplungseinrichtung mit einer Kupplungspedalbedieneinrichtung als Signaleingabevorrichtung sowie mit einem Kupplungsfußpedal als Betätigungsorgan oder eine Gaspedaleinrichtung mit einer Gaspedalbedieneinrichtung als Signaleingabevorrichtung sowie mit einem Gasfußpedal als Betätigungsorgan.

Zeichnung

Die Erfindung wird nachstehend anhand eines Ausführungsbeispiels unter Bezugnahme auf die beigefügte Zeichnung näher beschrieben. Es zeigt

Fig.1    einen Längsschnitt durch einen oberen Teil einer Betriebsbremspedaleinrichtung, welche eine bevorzugte Ausführungsform einer elektrischen Signaleingabevorrichtung gemäß der Erfindung beinhaltet;

Fig.2    einen schematischen Längsschnitt eines Teils der Ausführungsform von Fig.1;

Fig.3    eine Fahrstellung der Betriebsbremspedaleinrichtung von Fig.2;

Fig.4    eine maximale Bremsstellung der Betriebsbremspedaleinrichtung von Fig.2;

Fig.5    ein Blockschaltbild von zwei Schwingkreisen mit zugehöriger Auswerteelektronik der elektrischen Signaleingabevorrichtung gemäß der Erfindung;

Fig.6    ein Diagramm, in welchem das Schwingkreissignal des einen Schwingkreises und das Schwingkreissignal des anderen Schwingkreises von Fig.5 über dem Betätigungsweg des Bremspedals angetragen sind.

Beschreibung des Ausführungsbeispiels

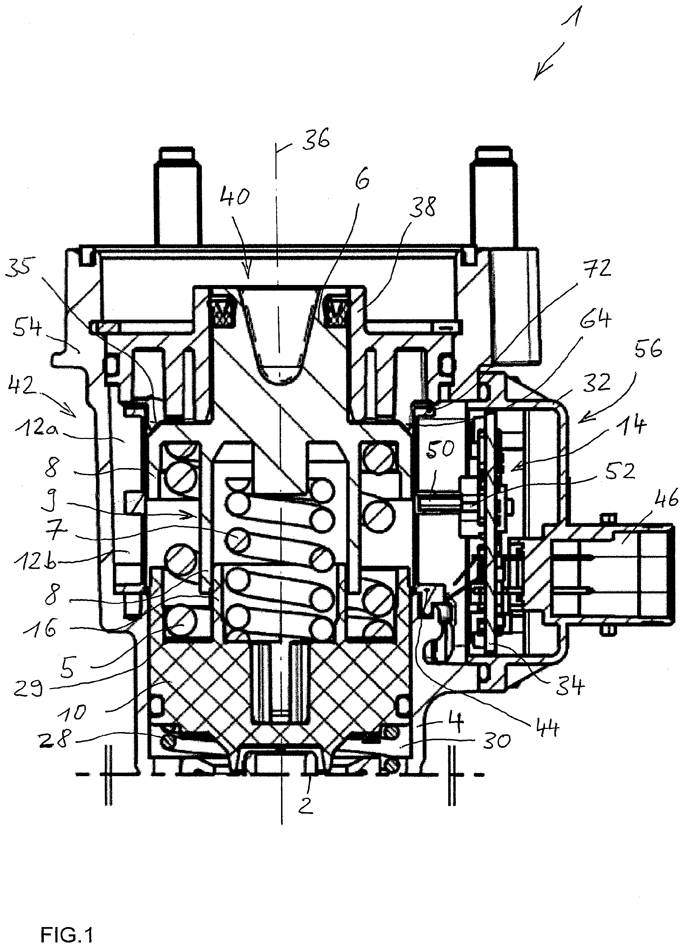

Der in der Fig.1 bis Fig.4 gezeigte obere Teil einer elektro-pneumatischen Betriebsbremspedaleinrichtung 1 oder eines elektro-pneumatischen Betriebsbremsventils bzw. Fußbremsmoduls ist Bestandteil einer elektro-pneumatischen Bremseinrichtung eines Nutzfahrzeugs und beinhaltet eine bevorzugte Ausführungsform einer elektrischen Signaleingabevorrichtung gemäß der Erfindung. Die elektro-pneumatische Betriebsbremseinrichtung weist beispielsweise einen elektrischen Bremskreis und zwei pneumatische Betriebsbremskreise auf.

Die Betriebsbremspedaleinrichtung 1 beinhaltet unter anderem einen von einem nicht dargestellten Betriebsbremspedal betätigten, in einem Gehäuse 4 axial beweglichen Stößel 6. Der Stöße 6 weist ein Stößelhemd 8 auf, an welchem eine Schraubendruckfederanordnung 9, die beispielsweise aus zwei parallel und koaxial angeordneten Schraubenfedern besteht, einer ersten, beispielsweise äußeren Schraubenfeder 5 und einer zweiten, beispielsweise inneren Schraubenfeder 7, einendseitig abgestützt ist, welche anderendseitig an einem Ventilkolben 10 abgestützt ist. Der Stößel 6 besteht beispielsweise aus einem elektrisch leitenden und paramagnetischen Material, insbesondere aus Aluminium. Alternativ kann der Stößel 6 auch aus einem weichmagnetischen oder ferromagnetischen Material bestehen. Weiterhin bestehen die Schraubenfedern 5, 7 der Schraubenfederanordnung 9 vorzugsweise aus paramagnetischem Material.

Der Stößel 6 ist bevorzugt an dem Ventilkolben 10 axial beweglich geführt, beispielsweise dadurch, dass das Stößelhemd 8 ein Ventilhemd 16 des Ventilkolbens 10 gleitend umschließt. Der äußeren Schraubenfeder 5 und dem Ventilkolben 10 kann ein auswechselbares Distanzelement 29 angeordnet sein.

Der Ventilkolben 10 ist über eine dritte, in Fig. 1 nur teilweise sichtbare Schraubenfeder 28 an dem Gehäuse 4 abgestützt. Weiterhin begrenzt der Ventilkolben 10 mit seiner von der Schraubenfederanordnung 9 weg weisenden Kolbenfläche eine Arbeitskammer 30, welche über einen Arbeitsanschluss des Gehäuses 4 mit einer zu pneumatischen Radbremszylindern führenden Bremsdruckleitung verbunden ist.

Der Ventilkolben 10 betätigt in bekannter Weise ein hier aus Maßstabsgründen nicht mehr dargestelltes Doppelsitzventil, um den Arbeitsanschluss bzw. die Arbeitskammer entweder mit einer Entlüftung (Fahrstellung) oder mit einem Vorratsanschluss (Bremsstellung) zu verbinden, an welchen eine zu einem Druckluftvorrat führende Vorratsdruckleitung angeschlossen ist. Der Arbeitsanschluss steht über eine pneumatische Druckleitung des pneumatischen Betriebsbremskreises mit einem pneumatischen Anschluss eines Druckregelmoduls in Verbindung, welche den pneumatischen Betriebsbremskreis über ein integriertes Backup-Magnetventil an pneumatische Betriebsbremszylinder weiter schleift. Die Arbeitskammer ist daher je nach Betätigungszustand des Doppelsitzventils entweder mit einer Entlüftung oder mit einem Druckluftvorrat verbunden.

Ferner ist eine einen Teil einer berührungslos arbeitenden, induktiven Sensoreinrichtung bildende Magnetspulenanordnung 42 mit einem Spulenkörper 44 sowie auf den Spulenkörper 44 gewickelten und hier beispielsweise axial hintereinander angeordneten induktiven Magnetspulen 12a, 12b im Gehäuse 4 axial im Bereich des Stößelhemds 8 des Stößels 6 angeordnet. Die Magnetspulen 12a, 12b sind mit einer in einem an das Gehäuse 4 an einem Umfangsabschnitt angeflanschten Elektronikgehäuse 32 angeordneten Auswerteelektronik 14 elektrisch leitend verbunden ist. Die Komponenten der Auswerteelektronik 14 sind auf einer Platine 34 angeordnet, welche im eingebauten Zustand des Elektronikgehäuses 32 beispielsweise parallel zu einer Mittelachse 36 der Betriebsbremspedaleinrichtung 1 ist. Insbesondere ist die Plattenebene der Platine 34 parallel zur Mittelachse 36 des Gehäuses 4 angeordnet. Dann ist die Platine 34 tangential an dem Gehäuse 4 angeordnet.

Der Spulenkörper 44 mit den Magnetspulen 12a, 12b umschließt insbesondere den Stößel 6 und insbesondere dessen Stößelhemd 8 und die Schraubenfederanordnung 9 ringförmig und ist dabei innerhalb des Gehäuses 4 ortsfest angeordnet. Die Magnetspulen 12a, 12b sind dadurch mit der Auswerteelektronik 14 elektrisch verbindbar, ohne dass eine solche Verbindung selbst einer Lageänderung unterliegt.

Ein oberer Anschlag für den Stößel 6 kann durch einen Führungskörper 38 gebildet werden, der in dem Gehäuse 4 kopfseitig gehalten und in dessen zentraler Durchgangsöffnung 40 der Stößel 6 dichtend geführt ist. Die axiale Führung des Stößels 6 in der Durchgangsöffnung 40 des Führungskörpers 38 kann auch durch eine Verdrehsicherung ergänzt sein, beispielsweise mittels eines Kerbzahnprofils, so dass die Umfangslage des Stößels 6 gegenüber dem Führungskörper 38 definiert ist.

Dabei sind das Gehäuse 4, der Stößel 6, die Schraubenfederanordnung 9, der Ventilkolben 10, die Magnetspulen 12a, 12b und der Führungskörper 38 im Wesentlichen, d.h. gegebenenfalls mit konstruktiv bedingt lokal abweichenden Ausformungen wie etwa durch das Elektronikgehäuse 32 bedingt, koaxial mit der Mittelachse 36 angeordnet.

Eine obere Endposition des Stößels 6, in welcher dieser an den Führungskörper 38 anschlägt, markiert dann die Fahr- oder Ausgangsstellung mit gelöster Betriebsbremse, bei welchem der Ventilkolben 10 von einem im Gehäuse 4 axial geführten Ventilkörper 2 des Doppelsitzventils abgehoben ist und dadurch Druckluft vom Arbeitsanschluss über die Arbeitskammer in die Entlüftung strömen kann, was eine Entlüftung des pneumatischen Betriebsbremskreises nach sich zieht. Die Magnetspulen 12a, 12b erzeugen dabei ein entsprechendes elektrisches (Null-) Betriebsbremsanforderungssignal, welches von der Auswerteelektronik 14 ausgewertet wird.

Wenn der Fahrer dann ausgehend von der Fahrstellung mit dem Fuß die Betriebsbremsplatte betätigt, bewegt sich dadurch der Stößel 6 axial nach unten. Diese Bewegung wird bis zu einem Anfangshub ausschließlich durch die erste Schraubenfeder 5 auf den Ventilkolben 10 übertragen. Wenn dann der Anfangshub überwunden ist, kommt der Stößel 6 an der zweiten Schraubenfeder 7 zur Anlage, wodurch nun auch die zweite Schraubenfeder 7 die Betätigungskraft auf den Ventilkolben 10 überträgt.

Da der Ventilkolben 10 über die dritte Schraubenfeder 28 an dem Gehäuse 4 abgestützt ist, werden die beiden Schraubenfedern 5, 7 der Schraubenfederanordnung 9 um einen Kompressionsweg komprimiert, wie anhand von Fig.1 leicht vorstellbar ist.

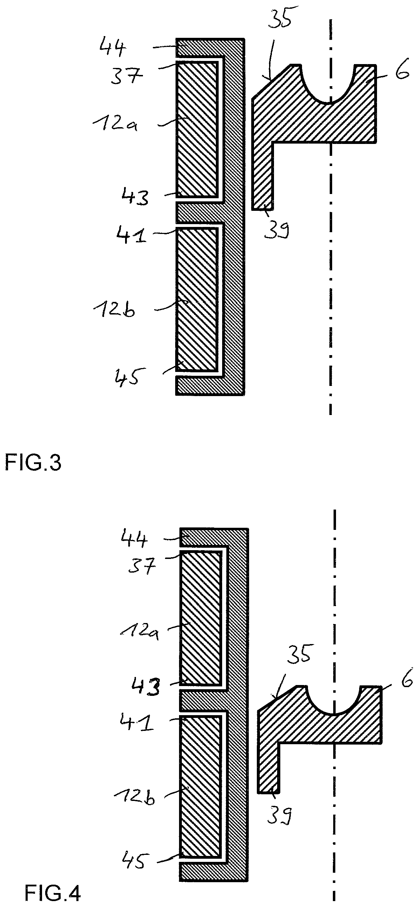

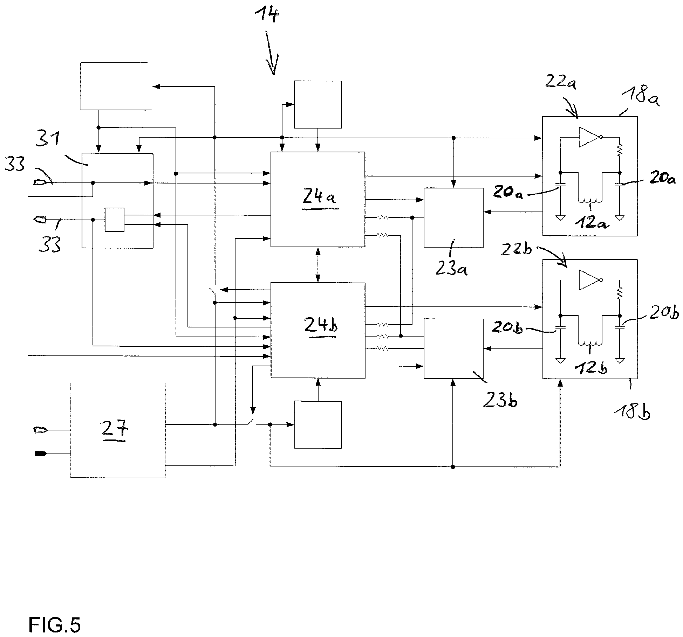

Die induktiven Magnetspulen 12a, 12b verändern dann, wenn das Stößelhemd 8 des Stößels 6 aufgrund einer Betätigung der Betriebsbremsplatte in axialer Richtung von oben gesehen aus der ersten Magnetspule 12a teilweise aus- und in die zweite Magnetspule 12b teilweise eintaucht (Fig.3, Fig.4), ihre Induktivität L, was durch die Auswerteelektronik 14 detektierbar ist, welche dann mittels einer auf der Platine 34 integrierten Schaltung aus der veränderten Induktivität L der Magnetspulen 12a, 12b ein der axialen Bewegung des Stößels 6 proportionales elektrisches Betriebsbremsanforderungssignal bildet. Insbesondere taucht der Stößel 6 bzw. dessen Stößelhemd 8 bei einer solchen Hubbewegung aus der ersten Magnetspule 12a teilweise heraus und in die zweite Magnetspule 12b teilweise ein. Die Magnetspulen 12a, 12b sind jeweils Bestandteil eines eigenen Schwingkreises, welcher jeweils ein Schwingkreissignal liefert (Fig.5). Daher erzeugen die Magnetspulen 12a, 12b im Hinblick auf die jeweilige Induktivität L konvergierende oder divergierende Schwingkreissignale, welche die jeweilige Induktivitätsänderung charakterisieren und aus welchen dann die Auswerteelektronik 14 ein elektrisches Betriebsbremsanforderungssignal als Ausgangssignal erzeugt.

Die Auswerteelektronik 14 ist über eine beispielsweise integrierte digitale Schnittstelle (A/D-Wandler) und über eine elektrische Steckverbindung 46 an eine hier nicht gezeigte Kommunikationsleitung, beispielsweise an einen Datenbus angeschlossen ist, an dem auch ein zentrales elektronisches Bremssteuergerät der elektro-pneumatischen Betriebsbremseinrichtung angeschlossen ist, so dass das elektrische Betriebsbremsanforderungssignal innerhalb des elektrischen Betriebsbremskreises in dieses elektronische Bremssteuergerät eingesteuert wird. In dem Bremssteuergerät kann das Betriebsbremsanforderungssignal dann achsweise oder radweise durch höhere Funktionen wie beispielsweise eine automatische achslastabhängige Bremsdruckregelung, eine Differenzschlupfregelung etc. verändert werden, bevor es in Druckregelmodule der Vorderachse bzw. der Hinterachse eingesteuert wird. In den Druckregelmodulen sind lokale Steuergeräte installiert, die dann mittels einer Einlass-/Auslass-Magnetventilkombination, die ein Relaisventil vorsteuert, um einen von den Betriebsbremsanforderungssignalen abhängigen Bremsdruck in den zugeordneten pneumatischen Betriebsbremszylinder(n) zu erzeugen. Mittels eines jeweils in ein solches Druckregelmodul integrierten Drucksensors findet dann eine Regelung des ausgesteuerten Ist-Bremsdrucks durch Angleichung an einen durch das Betriebsbremsanforderungssignal repräsentierten Soll-Bremsdruck statt.

Die Erfindung ist nicht auf das oben beschriebene Ausführungsbeispiel beschränkt. Gemäß einer weiteren, hier nicht gezeugten Ausführungsform kann sie auch beispielsweise in einer rein elektrischen Betriebsbremspedaleinrichtung 1 einer elektrischen Bremseinrichtung ausgebildet sein, welche lediglich über wenigstens einen elektrischen Kanal verfügt. In diesem Fall ist dann weder ein Ventilkolben 10 noch ein Doppelsitzventil vorhanden. Anstatt an dem Ventilkolben 10 ist dann die Schraubenfederanordnung 9 an einem Boden oder an einer Innenwandung (Gehäuseabschnitt) des Gehäuses 4 abgestützt. Auch kann anstatt einer Schraubenfederanordnung aus Stahlschraubenfedern eine Federanordnung aus Gummi oder aus einem anderen elastischen Material verwendet werden.

Die von einer elektrischen Energiequelle mit elektrischem Wechselstrom versorgten und daher wechselstromdurchflossenen Magnetspulen 12a, 12b sind Bestandteil der Magnetspulenanordnung 42, die weiterhin den eine Spulenkörperöffnung 48 aufweisenden stationären Spulenkörper 44 aufweist, auf welchen die Magnetspulen 12a, 12b gewickelt sind, die wenigstens im Inneren der Spulenkörperöffnung 48 ein Magnetfeld erzeugen. Weiterhin weist die Magnetspulenanordnung 42 wenigstens ein von dem Spulenkörper 44 nach radial außen weg ragendes elektrisches Kontaktelement 50 auf, welches an die Magnetspulen 12a, 12b angeschlossen ist. Das oder die elektrische(n) Kontaktelement(e) 50 steht (stehen) mit auf der Platine 34 angeordneten elektronischen Bauelementen der Auswerteelektronik 14 in leitender Verbindung, beispielsweise dadurch, dass das wenigstens eine, bevorzugt als sog. Pin ausgebildete Kontaktelement 50 in eine Kontaktaufnahme 52 der Platine 34 hineinragt, welche mit einer Leiterbahn der Platine 34 in Verbindung steht. Die Verbindung zwischen dem Kontaktelement 50 und der Kontaktaufnahme 52 kann beispielsweise eine Steckverbindung sein, die beim Befestigen des Platinengehäuses 32 an dem Gehäuse 4 automatisch zustande kommt, nachdem das Kontaktelement 50 zuvor entsprechend ausgerichtet wurde.

Das vorzugsweise größtenteils zylindrische Gehäuse 4 der Betriebsbremspedaleinrichtung 1 weist einen umlaufenden Mantel 54 auf, wobei in dem Mantel 54 eine Umfangsöffnung 56 ausgebildet ist, an deren Rand das Elektronikgehäuse oder Platinengehäuse 32 befestigt ist.

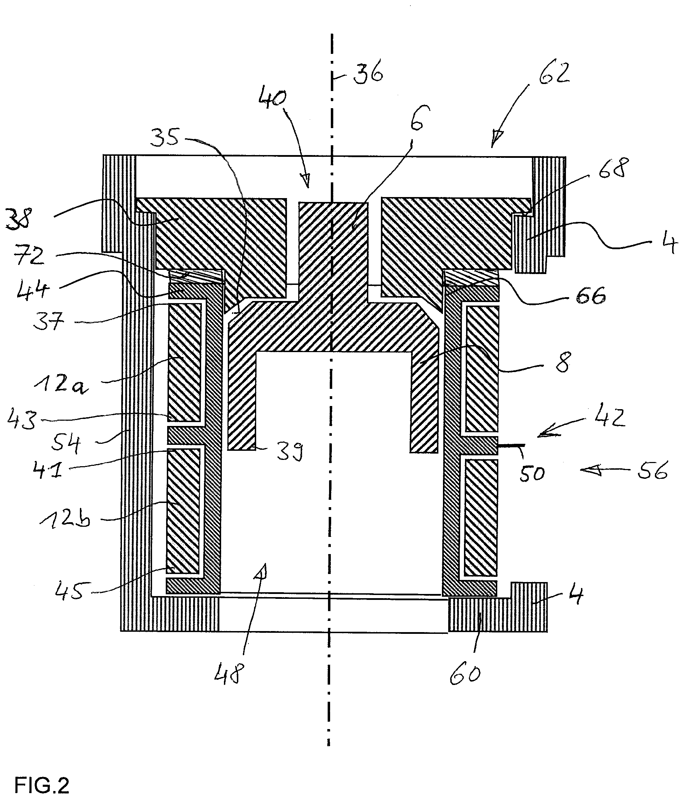

Über diese Umfangsöffnung 56 ist dann die Magnetspulenanordnung 42 komplett und schubladenartig in das Gehäuse 4 derart eingeschoben, dass das wenigstens eine elektrische Kontaktelement 50 im Bereich der Umfangsöffnung 56 angeordnet bzw. in diese hinein- oder aus dieser nach außen ein Stück weit herausragt. Wie insbesondere anhand von Fig.2 bis Fig.4 erkennbar ist, verfügt das Gehäuse 4 über eine ringförmige, vom Mantel 54 nach radial innen weisende Innenwandung 60, auf welcher der Spulenkörper 44 der Magnetspulenanordnung 42 nach erfolgtem Einschub bodenseitig zur Anlage kommt.

Nachdem die Magnetspulenanordnung 42 auf diese Weise im Gehäuse 4 platziert wurde, wird durch die in vertikaler Gebrauchslage gesehen obere Öffnung 62 im Gehäuse 4 von oben her der Führungskörper 38 zusammen mit dem bereits in den Führungskörper 38 eingesetzten Stößel 6 in das Gehäuse 4 eingesetzt. Dabei greift ein unteres, ringförmiges Ende 64 des Führungskörpers 38, an dem nach radial außen und deformierbare Zentrierelemente 66 ausgebildet sind in die Spulenkörperöffnung 48 des Spulenkörpers 44 ein, wobei der Außendurchmesser des Führungskörpers 38 inklusive Zentrierelemente 66 geringfügig größer ist als der Innendurchmesser der Spulenkörperöffnung 48, wodurch sich die Zentrierelemente 66 verformen, wie anhand von Fig.3 leicht vorstellbar ist.

Der Führungskörper 38 wird dabei soweit in axialer Richtung in das Gehäuse 4 eingesetzt, bis er an einem Gehäuseabsatz 68 zur Anlage kommt. In dieser axialen Position klemmt er zwischen sich und der Innenwandung 60 den Spulenkörper 44 bzw. die Magnetspulenanordnung 42 in axialer Richtung. Damit wird daher die Magnetspulenanordnung 42, insbesondere deren Spulenkörper 44, nachdem die Magnetspulenanordnung 42 von der Seite her oder radial in das Gehäuse 4 eingesetzt worden ist, in axialer Richtung geklemmt, indem der Führungskörper 38 am Gehäuse 4 kopfseitig oder deckelseitig befestigt wird. Anstatt in einer Innenwandung 60 kann die Stützfläche durch einen beliebigen Gehäuseabschnitt des Gehäuses gebildet werden, beispielsweise durch einen Boden des Gehäuses 4 in dem Fall, in welchem bei einer rein elektrischen Betriebsbremseinrichtung kein pneumatischer Betriebsbremskreis und damit auch kein Ventilkolben 10 vorhanden ist, der ein Doppelsitzventil steuert.

Die Klemmung des Spulenkörpers 44 zwischen dem Führungskörper 38 und der Innenwandung 60 des Gehäuses 4 kann auch eine axial wirksame Federanordnung beinhalten, hier beispielsweise in Form einer Wellfeder 72, die axial zwischen einer oberen Kopffläche des Spulenkörpers 44 und einer Bodenfläche des Führungskörpers 38 z.B. als axialer Spiel- oder Toleranzausgleich geklemmt ist.

Besonders bevorzugt ist in Einschubrichtung gesehen die Magnetspulenanordnung 42 und insbesondere deren Spulenkörper 44 in dem Gehäuse 4 durch hier nicht erkennbare Rastelemente verrastbar, welche die Magnetspulenanordnung 44 gegen ein unbeabsichtigtes Herausfallen oder Herausbewegen aus dem Gehäuse 4 sichern. Dabei können z.B. miteinander zusammenwirkende Rastelemente am Spulenkörper 44 sowie am Gehäuse 4 vorgesehen sein.

Erst wenn die Magnetspulenanordnung 42 in ihrer zentrierten Endlage axial geklemmt bzw. gesichert ist, wird das Platinengehäuse 32 mit der darin befestigten Platine 34 im Bereich der Umfangsöffnung 56 an dem Gehäuse 4 bzw. an dem Rand der Umfangsöffnung 56 derart befestigt, dass während der Befestigung des Platinengehäuses 32 bzw. der Platine 34 an dem Gehäuse 4 das wenigstens eine von der Magnetspulenanordnung 42 nach radial außen weg ragende, elektrische Kontaktelement 50 mit der Kontaktaufnahme 52 der Platine 34 in Kontakt tritt, wie Fig.1 zeigt.

Bei der in Fig.1 bis Fig.4 gezeigten Ausführungsform wird der Stößel 6 am Führungskörper 38, nicht aber am Spulenkörper 44 geführt. Durch die Gleitverbindung Stößelhemd 8/Ventilkolbenhemd 16 wird der Stößel 6 zusätzlich noch am Ventilkolben 10 axial geführt, welcher wiederum im Gehäuse 4 axial geführt ist. Diese zusätzliche Führung am Ventilkolben 10 ist aber optional. Stattdessen kann der Stößel 6 auch ausschließlich am Führungskörper 38 geführt sein.

Im montierten Zustand erfasst die induktive Sensoreinrichtung aus Magnetspulenanordnung 42 und Auswerteelektronik 14 dann einen Betätigungsgrad des Betriebsbremspedals zwischen einer eine Nichtbetätigung repräsentierenden Fahrstellung und einer eine maximale Betätigung repräsentierenden Stellung graduell und erzeugt ein diesen Betätigungsgrad repräsentierendes Betätigungssignal abhängig von der Eintauchtiefe des Stößels 6 bzw. des Stößelhemds 8 in die Spulenkörperöffnung 48 des Spulenkörpers 44 und damit in das von den Magnetspulen 12a, 12b jeweils erzeugte Magnetfeld.

Wie aus Fig.1 bis Fig.4 hervorgeht, sind hier beispielsweise zwei koaxial hintereinander angeordnete Magnetspulen 12a, 12b vorgesehen. Es können aber auch mehr als nur zwei axial hintereinander angeordnete Magnetspulen vorgesehen sein. Die Magnetspulen 12a, 12b sind auf den Spulenkörper 44 gewickelt, wobei der Spulenkörper 44 aus PBT (Polybutylenterephthalat), aus PPS (Polyphenylensulfid) oder aus POM (Polyoxymethylen) besteht. Diese Materialien haben eine geringe Tendenz, Wasser aufzunehmen, was feuchtigkeitsbedingte parasitäre Kapazitäten, welche zu Signaländerungen führen können, vermeiden lässt.

Bei einer Betätigung des Betriebsbremspedals ausgehend von einer keine Betätigung repräsentierenden Ausgangsstellung oder Fahrstellung in eine einen beliebigen Betätigungsgrad des Betriebsbremspedals repräsentierende Betätigungsstellung oder Bremsstellung taucht der Stößel 6 aus der einen Magnetspule 12a teilweise aus und in die sich an die eine Magnetspule 12a axial anschließende andere Magnetspule 12b teilweise ein, wie insbesondere aus Fig.3 und Fig.4 hervorgeht, wobei Fig.3 die Fahrstellung und Fig.4 die maximale Bremsstellung des Betriebsbremspedals bzw. des Stößels 6 zeigt. Zwischen den beiden Extremstellungen - Fahrstellung in Fig.3 und maximale Bremsstellung in Fig.4 - sind beliebige Stellungen des Betriebsbremspedals bzw. des Stößels 6 möglich und führen dann zu einem entsprechenden Betriebsbremsanforderungssignal.

Dabei sind die Magnetspulen 12a, 12b in jeweils einen eigenen, jeweils ein eigenes Schwingkreissignal liefernden Schwingkreis 18a, 18b geschaltet, wie Fig.5 zeigt. Ein solcher Schwingkreis 18a, 18b beinhaltet jeweils eine Magnetspule 12a oder 12b, wenigstens zwei Kondensatoren 20a, 20b sowie einen Oszillator 22a, 22b. Dann beruhen die Schwingkreissignale der beiden Schwingkreise 18a, 18b auf der bedingt durch die Bewegung des Stößels 6 veränderten Induktivität L der betreffenden Magnetspule 12a oder 12b und/oder auf der dadurch veränderten Frequenz f des betreffenden Schwingkreises 18a, 18b. Der Stößel 6 kann dabei elektrisch leitend und/oder ferromagnetisch sein, je nachdem ob der das von den Magnetspulen 12a, 12b erzeugte magnetische Feld stärken oder schwächen soll.

Die Auswerteelektronik 14 weist hier bevorzugt zwei Mikroprozessoren 24a, 24b auf, wobei jedem Schwingkreis 18a, 18b beispielsweise ein eigener Mikroprozessor 24a, 24b zugeordnet ist, in welchen das betreffende Schwingkreissignal 26a, 26b eingesteuert wird. Die Auswertung der Schwingkreissignale 26a, 26b in Form der Bildung eines die Betätigung des Betriebsbremspedals repräsentierenden Betriebsbremsanforderungssignals kann von nur einem Mikroprozessor 24a oder 24b vorgenommen und durch den anderen Mikroprozessor 24b oder 24a überwacht werden, weshalb die beiden Mikroprozessoren 24a, 24b miteinander in Signalverbindung stehen. Alternativ kann auch in beiden Mikroprozessoren 24a, 24b jeweils eine solche Auswertung auf der Basis des jeweiligen Schwingkreissignals 26a, 26b vorgenommen werden

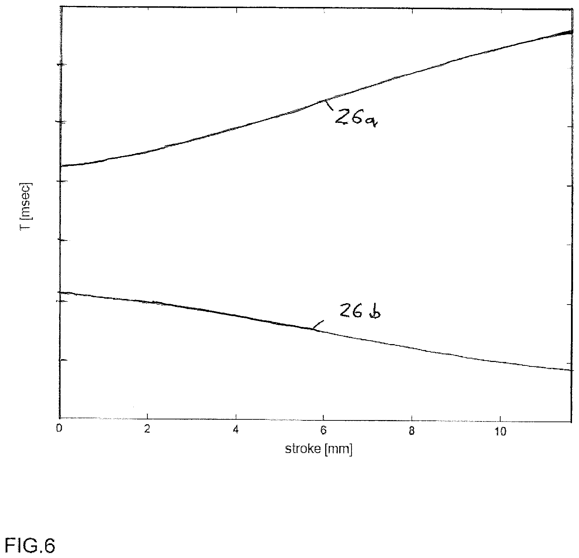

Die Mikroprozessoren 24a, 24b werden von einer elektrischen Energiequelle 27 stromversorgt und sind über einen A/D-Wandler 31 mit einem Datenbus 33 der Betriebsbremseinrichtung verbunden. Die Schwingkreissignale 26a, 26b werden vor ihrer Auswertung in den Mikroprozessoren 24a, 24b bevorzugt in Frequenzteilern 23a, 23b bearbeitet, wobei jedem Schwingkreis 18a, 18b ein solcher Frequenzteiler 23a, 23b zugeordnet ist. Die Schwingkreissignale 26a, 26b, wie sie den Mikroprozessoren 24a, 24b zugeführt werden, weisen den in Fig.6 gezeigten Verlauf über dem Betätigungsweg des Betriebsbremspedals bzw. des Stößels 6 auf.

In dem Diagramm von Fig.6 ist auf der senkrechten Achse als Schwingkreissignal 26a, 26b beispielsweise die Periode T der Schwingung des betreffenden Schwingkreises 18a, 18b angetragen und auf der horizontalen Achse der Betätigungshub des Stößels 6. Demzufolge divergieren beispielsweise mit steigendem Betätigungsgrad des Betriebsbremspedals die Schwingkreissignale 26a, 26b der beiden Schwingkreise 18a, 18b. Weiterhin ist in Fig.6 auch sichtbar, dass die Schwingkreissignale 26a, 26b der Schwingkreise 18a, 18b generell überschneidungsfrei oder überkreuzungsfrei sind, d.h. sie überschneiden oder überkreuzen sich nicht.

Diese Eigenschaften der Schwingkreissignale 26a, 26b, wie sie von den Schwingkreisen 18a, 18b geliefert werden, sind darauf zurückzuführen, dass die Schwingkreise 18a, 18b und/oder der Stößel 6 entsprechend ausgebildet werden. Der hier beispielsweise divergierende, aber stets überschneidungsfreie Verlauf der Schwingkreissignale 26a, 26b gemäß Fig.6 wird abhängig von wenigstens einem Parameter oder Einflussfaktor der folgenden Parameter oder Einflussfaktoren erzielt: Die Anzahl der Windungen auf den Magnetspulen 12a, 12b, die Anzahl der Windungslagen der Windungen auf den Magnetspulen 12a, 12b, die Länge und Durchmesser des Spulendrahtes der Magnetspulen 12a, 12b, die Kapazität der Kondensatoren 20a, 20b der Schwingkreise 18a, 18b, die Durchmesser der Magnetspulen 12a, 12b, die axiale Länge der Magnetspulen 12a, 12b, die Kontur oder der Querschnittsverlauf des Stößels 6 in axialer Richtung, wobei diese Aufzählung aber nicht abschließend ist.

Mit anderen Worten wird wenigstens einer der oben genannten Parameter oder Einflussfaktoren bei den beiden Magnetspulen 12a, 12b derart unterschiedlich ausgeführt bzw. bei dem Stößel 6 derart gewählt, so dass sich die gewünschte Charakteristik eines divergierenden oder konvergierenden und überscheidungsfreien Verlaufs der Schwingkreissignale ergibt. Dem Fachmann ist es aufgrund seines Fachwissens ohne weiteres möglich, durch Variation wenigstens eines der oben genannten Parameter oder Einflussfaktoren den gewünschten Verlauf der Schwingkreissignale beispielsweise gemäß Fig.6 zu erzeugen. Dabei können alternativ die Schwingkreissignale der Schwingkreise mit steigendem Betätigungsgrad des Betriebsbremspedals auch divergieren.

Basis für die Auslegung der Schwingkreise bildet die folgende Beziehung, durch welche die Resonanzfrequenz $f_{res}$ eines Schwingkreises in Abhängigkeit von der Induktivität $L_{Spule}$ der betreffenden Magnetspule 12a oder 12b, der Kapazität $C_{Oszillator}$ des Oszillators sowie der Schwingkreiskapazität $C_p$ bestimmt wird.

$$f_{res} = \frac{1}{2\pi} \frac{1}{\sqrt{L_{Spule}\left(C_{Oszillator} + C_P\right)}}$$

Bedingt durch den in Fig.6 gezeigten Verlauf der Schwingkreissignale 26a, 26b können gleichsinnig mit an- oder absteigender Betätigung des Betriebsbremspedals auf das Betriebsbremsbetätigungssignal wirkende Störeinflüsse eliminiert werden.

Besonders bevorzugt weist der Stößel 6 eine im Wesentlichen (rotations-) symmetrische Außenoberfläche auf, wobei ein Rand 35 seines Endes, welches von der anderen oder unteren Magnetspule 12b bzw. vom Stößelhemd 8 weg weist, nach Art einer Fase ausgebildet ist, wie in Fig.1 bis Fig.4 gezeigt ist.

In einer beispielsweise vertikalen Gebrauchslage der Betriebsbremspedaleinrichtung 1, in welcher die Mittelachse 36 gemäß Fig.1 bis Fig.4 im Wesentlichen vertikal angeordnet ist, stellt die eine Magnetspule 12a dann eine obere Magnetspule und die andere Magnetspule 12b eine untere Magnetspule dar, wobei die beiden Magnetspulen 12a, 12b axial aneinander anschließen und lediglich durch eine schmale Trennwand des Spulenkörpers 44 axial getrennt sind.

Dann taucht der obere, mit der Fase versehene Rand 35 des Stößels 6 bei einer beginnenden Betätigung des Betriebsbremspedals bzw. des Stößels 6 in die obere Magnetspule 12a ein, wie anhand von Fig.3 leicht vorstellbar ist, welche die unbetätigte Ausgangsposition oder Fahrposition des Betriebsbremspedals bzw. des Stößels 6 zeigt. Andererseits taucht aber der obere, mit der Fase versehene Rand 35 des Stößels 6 auch bei maximaler Betätigung des Betriebsbremspedals bzw. des Stößels 6 nicht in die untere Magnetspule 12b ein, wie aus Fig.4 hervorgeht.

Weiterhin bezogen auf die vertikale Gebrauchslage der Betriebsbremspedaleinrichtung 1 sind in der unbetätigten Ausgangsposition oder Fahrposition des Betriebsbremspedals bzw. des Stößels 6 wie sie Fig.3 zeigt, das nach Art einer Fase ausgebildete obere Rand 35 des Stößels 6 wenigstens teilweise unterhalb eines oberen Endes 37 der oberen Magnetspule 12a und das untere Ende 39 des Stößels 6 bzw. des Stößelhemds 8 unterhalb des unteren Endes 43 der oberen Magnetspule 12a, aber noch oberhalb eines oberen Endes 41 der unteren Magnetspule 12b angeordnet.

Darüber hinaus sind in der den maximalen Betätigungsgrad repräsentierenden Betätigungsposition des Betriebsbremspedals bzw. des Stößels 6 nach Fig. 4 der nach Art einer Fase ausgebildete obere Rand 35 des Stößels 6 wenigstens teilweise oberhalb des unteren Endes 43 der oberen Magnetspule 12a und das untere Ende 39 des Stößels 6 bzw. des Stößelhemds 8 noch oberhalb des unteren Endes 45 der unteren Magnetspule 12b angeordnet.

Die genannte Geometrie begünstigt die Ausbildung einer linearen Kennlinie der Sensoreinrichtung. Um eine Abschirmung gegenüber elektromagnetischen Feldern zu erzielen, sind das Gehäuse 4 und auch das Elektronikgehäuse 32 bevorzugt aus einem elektrisch leitenden Material wie beispielsweise aus Aluminium gefertigt.

Im Rahmen der Erfindung liegt auch jede mögliche Kombination von Merkmalen des oben beschriebenen Ausführungsbeispiels.

Bezuqszeichenliste

| 1 | Betriebsbremspedaleinrichtung |
| 2 | Ventilkörper |
| 4 | Gehäuse |
| 5 | erste Schraubenfeder |
| 6 | Stößel |
| 7 | zweite Schraubenfeder |
| 8 | Stößelhemd |
| 9 | Schraubenfederanordnung |
| 10 | Ventilkolben |
| 11 | Stellschraube |
| 12a/b | Magnetspulen |
| 14 | Auswerteelektronik |
| 16 | Ventilkolbenhemd |
| 18a/b | Schwingkreis |
| 20a/b | Kondensator |
| 22a/b | Oszillator |
| 23a/b | Frequenzteiler |
| 24a/b | Mikroprozessoren |
| 26a/b | Schwingkreissignal |
| 27 | Energiequelle |
| 28 | dritte Schraubenfeder |
| 29 | Distanzelement |
| 30 | Arbeitskammer |
| 31 | A/D-Wandler |
| 32 | Elektronikgehäuse |
| 33 | Datenbus |
| 34 | Platine |
| 35 | oberer Rand |
| 36 | Mittelachse |
| 37 | oberes Ende |
| 38 | Führungskörper |
| 39 | unteres Ende |
| 40 | Durchgangsöffnung |
| 41 | oberes Ende |
| 42 | Magnetspulenanordnung |
| 43 | unteres Ende |
| 44 | Spulenkörper |
| 45 | unteres Ende |
| 46 | Steckverbindung |
| 48 | Spulenkörperöffnung |
| 50 | Kontaktelement |
| 52 | Kontaktaufnahme |
| 54 | Mantel |
| 56 | Umfangsöffnung |
| 58 | erster Pfeil |
| 60 | Innenwandung |
| 62 | Öffnung |
| 64 | Ende |
| 66 | Zentrierelemente |
| 68 | Gehäuseabsatz |
| 70 | zweiter Pfeil |
| 72 | Wellfeder |

**Patentansprüche**

1. Elektrische Signaleingabevorrichtung für ein Fahrzeug zum Erzeugen eines einen Betätigungsgrad eines Betätigungsorgans repräsentierenden Betätigungssignals, welche wenigstens Folgendes beinhaltet:

   a) Das Betätigungsorgan,
   b) eine in einem Gehäuse (4) angeordnete induktive Sensoreinrichtung mit

b1) einer Magnetspulenanordnung (42) beinhaltend wenigstens eine von Wechselstrom durchflossene Magnetspule (12a, 12b),

b2) wenigstens einem im Gehäuse (4) beweglich gelagerten, in die wenigstens eine Magnetspule (12a, 12b) ein- und austauchbarer Tauchkörper (6), wobei die Induktivität (L) der wenigstens einen Magnetspule (12a, 12b) abhängig von der Eintauchtiefe des Tauchkörpers (6) in die wenigstens eine Magnetspule (12a, 12b) variiert, sowie mit

b3) einer mit der wenigstens einen Magnetspule (12a, 12b) in elektrischem Kontakt stehende Auswerteelektronik (14), wobei

c) der wenigstens eine Tauchkörper (6) mit dem Betätigungsorgan derart in Wirkverbindung steht, dass die Eintauchtiefe des Tauchkörpers (6) in die wenigstens eine Magnetspule (12a, 12b) abhängig von einem Betätigungsgrad des Betätigungsorgans ist, **dadurch gekennzeichnet, dass**

d) wenigstens zwei koaxial hintereinander angeordnete Magnetspulen (12a, 12b) derart vorgesehen sind, dass bei einer Betätigung des Betätigungsorgans ausgehend von einer keine Betätigung repräsentierenden Ausgangslage in eine einen gewissen Betätigungsgrad repräsentierende Betätigungslage der wenigstens eine Tauchkörper (65) aus einer Magnetspule (12a) wenigstens teilweise austaucht und in die sich an die eine Magnetspule (12a) axial anschließende Magnetspule (12b) wenigstens teilweise eintaucht, und dass

e) wenigstens zwei der Magnetspulen (12a, 12b) in jeweils einen eigenen, jeweils ein eigenes Schwingkreissignal (26a, 26b) liefernden Schwingkreis (18a, 18b) geschaltet sind, und

f) die dann wenigstens zwei Schwingkreise (18a, 18b) und/oder der wenigstens eine Tauchkörper (6) derart ausgebildet ist (sind), dass mit sich änderndem Betätigungsgrad des Betätigungsorgans das Schwingkreissignal (26a, 26b) des einen Schwingkreises (18a, 18b) in Bezug auf das Schwingkreissignal (26a, 26b) des anderen Schwingkreises (18a, 18b) divergiert oder konvergiert, wobei

g) die Auswerteelektronik (14) auf der Basis der Schwingkreissignale (26a, 26b) der wenigstens zwei Schwingkreise (18a, 18b) das Betätigungssignal erzeugt.

2. Signaleingabevorrichtung nach Anspruch 1, **dadurch gekennzeichnet, dass** die wenigstens zwei Schwingkreise (18a, 18b) und/oder der wenigstens eine Tauchkörper (6) derart ausgebildet ist (sind), dass die Schwingkreissignale (26a, 26b) der Schwingkreise (18a, 18b) überschneidungsfrei oder überkreuzungsfrei sind.

3. Signaleingabevorrichtung nach einem der vorhergehenden Ansprüche, **dadurch gekennzeichnet, dass** der divergierende oder konvergierende und/oder der überschneidungsfreie oder überkreuzungsfreie Verlauf der Schwingkreissignale (26a, 26b) der wenigstens zwei Schwingkreise (18a, 18b) abhängig von wenigstens einem Parameter der folgenden Parameter erzielt wird: Die Anzahl der Windungen auf den Magnetspulen (12a, 12b), die Anzahl der Windungslagen der Windungen auf den Magnetspulen (12a 12b), die Länge des Spulendrahtes der Magnetspulen (12a, 12b), die Kapazität der Kondensatoren (20a, 20b) der Schwingkreise (18a, 18b), die Durchmesser der Magnetspulen (12a, 12b), die axiale Länge der Magnetspulen (12a, 12b), die Kontur oder der Querschnittsverlauf des wenigstens einen Tauchkörpers (6).

4. Signaleingabevorrichtung nach einem der vorhergehenden Ansprüche, **dadurch gekennzeichnet, dass** das Schwingkreissignal (26a, 26b) auf der Induktivität (L) der Magnetspule (12a, 12b), auf der Frequenz (f), auf der Amplitude und/oder auf der Periode (T) des Schwingkreises (18a, 18b) basiert.

5. Signaleingabevorrichtung nach einem der vorhergehenden Ansprüche, **dadurch gekennzeichnet, dass** der Tauchkörper (6) elektrisch leitend und/oder ferromagnetisch ist.

6. Signaleingabevorrichtung nach einem der vorhergehenden Ansprüche, **dadurch gekennzeichnet, dass** der Tauchkörper (6) eine insbesondere rotationssymmetrische Außenoberfläche aufweist und ein Rand (35) seines Endes, welches von der anderen Magnetspule (12b) weg weist nach Art einer Fase ausgebildet ist.

7. Signaleingabevorrichtung nach Anspruch 6, **dadurch gekennzeichnet, dass** bezogen auf eine Gebrauchslage, in welcher eine Mittelachse (36) der Magnetspulen (12a, 12b) im Wesentlichen vertikal angeordnet und die eine Magnetspule (12a) eine obere Magnetspule und die andere Magnetspule (12b) eine untere Magnetspule ist, in der Ausgangslage des Betätigungsorgans der nach Art einer Fase ausgebildete obere Rand (35) des Tauchkörpers (6) wenigstens teilweise unterhalb eines oberen Endes (37) der oberen Magnetspule (12a) und das untere Ende (39) des Tauchkörpers (6) unterhalb des unteren Endes (43) der oberen Magnetspule (12a), aber oberhalb eines oberen Endes (41) der unteren Magnetspule (12b) angeordnet ist.

8. Signaleingabevorrichtung nach Anspruch 6 oder 7, **dadurch gekennzeichnet, dass** bezogen auf eine Gebrauchslage, in welcher eine Mittelachse (36) der Magnetspulen (12a, 12b) im Wesentlichen vertikal angeordnet und die eine Magnetspule (12a) eine obere Magnetspule und die andere Magnetspule (12b) eine untere Magnetspule ist, in einer einen maximalen Betätigungsgrad repräsentierenden Betätigungslage des Betätigungsorgans der nach Art einer Fase ausgebildete obere Rand (35) des Tauchkörpers (6) wenigstens teilweise oberhalb des unteren Endes (43) der oberen Magnetspule (12a) und das untere Ende (39) des Tauchkörpers (6) oberhalb des unteren Endes (45) der unteren Magnetspule (12b) angeordnet ist.

9. Signaleingabevorrichtung nach einem der vorhergehenden Ansprüche, **dadurch gekennzeichnet, dass** das Gehäuse (4, 32) aus einem elektrisch leitenden Material gefertigt ist.

10. Signaleingabevorrichtung nach einem der vorhergehenden Ansprüche, **dadurch gekennzeichnet, dass** die Magnetspulen (12a, 12b) auf wenigstens einen Spulenkörper (44) der Magnetspulenanordnung (42) gewickelt sind.

11. Signaleingabevorrichtung nach Anspruch 10, **dadurch gekennzeichnet, dass** der wenigstens eine Spulenkörper (44) aus PBT (Polybutylenterephthalat), aus PPS (Polyphenylensulfid) oder aus POM (Polyoxymethylen) besteht.

12. Signaleingabevorrichtung nach einem der vorhergehenden Ansprüche, **dadurch gekennzeichnet, dass** die Magnetspulenanordnung (42) einem den Tauchkörper (6) wenigstens axial führenden Führungskörper (38) und einem Gehäuseabschnitt (60) axial zwischengeordnet ist, und zwischen der Magnetspulenanordnung (42) und dem Führungskörper (38) eine axial wirksame Federanordnung (72) angeordnet ist, welche aus paramagnetischem Material besteht.

13. Signaleingabevorrichtung nach einem der vorhergehenden Ansprüche, **dadurch gekennzeichnet, dass** der Tauchkörper (6) zumindest teilweise durch einen Stößel (6) gebildet wird, welcher durch das Betätigungsorgan betätigt wird.

14. Signaleingabevorrichtung nach einem der vorhergehenden Ansprüche, **dadurch gekennzeichnet, dass** die Auswerteelektronik (14) wenigstens zwei Mikroprozessoren (24a, 24b) aufweist, wobei jedem Schwingkreis (18a, 18b) ein eigener Mikroprozessor (24a, 24b) zugeordnet ist, welcher das zugeordnete Schwingkreissignal (26a, 26b) oder alle Schwingkreissignale (26a, 26b) auswertet.

15. Signaleingabevorrichtung nach einem der vorhergehenden Ansprüche, **dadurch gekennzeichnet, dass** sie Teil einer Betriebspedalbremseinrichtung einer elektro-pneumatischen oder elektrischen Bremseinrichtung eines Fahrzeugs ist.

16. Elektro-pneumatische oder elektrische Fahrzeugeinrichtung eines Fahrzeugs, insbesondere Betriebsbremseinrichtung oder Feststellbremseinrichtung beinhaltend eine Signaleingabevorrichtung nach einem der vorhergehenden Ansprüche.

17. Fahrzeugeinrichtung nach Anspruch 16, **dadurch gekennzeichnet, dass** sie eine Parkbremseinrichtung mit einer Hand- oder Fußbedieneinrichtung als Signaleingabevorrichtung sowie einem Fußpedal- oder einem Handbetätigungsorgan als Betätigungsorgan, eine Kupplungseinrichtung mit einer Kupplungspedalbedieneinrichtung als Signaleingabevorrichtung sowie mit einem Kupplungsfußpedal als Betätigungsorgan oder eine Gaspedaleinrichtung mit einer Gaspedalbedieneinrichtung als Signaleingabevorrichtung sowie mit einem Gasfußpedal als Betätigungsorgan ist.

18. Fahrzeug beinhaltend eine elektro-pneumatische oder elektrische Fahrzeugeinrichtung nach Anspruch 16 oder 17.

## Claims

1. Electrical signal input apparatus for a vehicle for generating an actuation signal which represents a degree of actuation of an actuation means, which electrical signal input apparatus comprises at least the following:

    a) the actuation means,
    b) an inductive sensor device arranged in a housing (4), having

      b1) a magnet coil arrangement (42) comprising at least one magnet coil (12a, 12b) through which alternating current flows,
      b2) having at least one plunger (6) which is movably mounted in the housing (4) and which can protrude into and emerge from the at least one magnet coil (12a, 12b), wherein the inductance (L) of the at least one magnet coil (12a, 12b) varies in a manner dependent on the protrusion depth of the plunger (6) into the at least one magnet coil (12a, 12b), and having
      b3) evaluation electronics (14) which are in electrical contact with the at least one magnet coil (12a, 12b), wherein

c) the at least one plunger (6) is operatively connected to the actuation means such that the protrusion depth of the plunger (6) into the at least one magnet coil (12a, 12b) is dependent on a degree of actuation of the actuation means, **characterized in that**

d) at least two magnet coils (12a, 12b) arranged coaxially one behind the other are provided such that, when the actuation means is actuated from an initial position which represents no actuation into an actuated position which represents a certain degree of actuation, the at least one plunger (65) at least partially emerges from a magnet coil (12a) and at least partially protrudes into the magnet coil (12b) axially adjacent to the magnet coil (12a), and **in that**

e) at least two of the magnet coils (12a, 12b) are connected into in each case one dedicated resonant circuit (18a, 18b) which provides in each case one dedicated resonant circuit signal (26a, 26b), and

f) the then at least two resonant circuits (18a, 18b) and/or the at least one plunger (6) are/is designed such that, with changing degree of actuation of the actuation means, the resonant circuit signal (26a, 26b) of one resonant circuit (18a, 18b) diverges or converges in relation to the resonant circuit signal (26a, 26b) of the other resonant circuit (18a, 18b), wherein

g) the evaluation electronics (14) generate the actuation signal on the basis of the resonant circuit signals (26a, 26b) of the at least two resonant circuits (18a, 18b).

2. Signal input apparatus according to Claim 1, **characterized in that** the at least two resonant circuits (18a, 18b) and/or the at least one plunger (6) are/is designed such that the resonant circuit signals (26a, 26b) of the resonant circuits (18a, 18b) exhibit no overlap or crossover.

3. Signal input apparatus according to one of the preceding claims, **characterized in that** the divergent or convergent and/or the non-overlapping or non-crossing profile of the resonant circuit signals (26a, 26b) of the at least two resonant circuits (18a, 18b) is obtained in a manner dependent on at least one parameter of the following parameters: the number of windings on the magnet coils (12a, 12b), the number of winding layers of the windings on the magnet coils (12a, 12b), the length of the coil wire of the magnet coils (12a, 12b), the capacitance of the capacitors (20a, 20b) of the resonant circuits (18a, 18b), the diameters of the magnet coils (12a, 12b), the axial length of the magnet coils (12a, 12b), the contour or the cross-sectional profile of the at least one plunger (6).

4. Signal input apparatus according to one of the preceding claims, **characterized in that** the resonant circuit signal (26a, 26b) is based on the inductance (L) of the magnet coil (12a, 12b), on the frequency (f), on the amplitude and/or on the period (T) of the resonant circuit (18a, 18b).

5. Signal input apparatus according to one of the preceding claims, **characterized in that** the plunger (6) is electrically conductive and/or ferromagnetic.

6. Signal input apparatus according to one of the preceding claims, **characterized in that** the plunger (6) has an in particular rotationally symmetrical outer surface, and an edge (35) of its end pointing away from the other magnet coil (12b) is formed in the manner of a bevel.

7. Signal input apparatus according to Claim 6, **characterized in that**, with regard to a usage position in which a central axis (36) of the magnet coils (12a, 12b) is arranged substantially vertically and one magnet coil (12a) is an upper magnet coil and the other magnet coil (12b) is a lower magnet coil, in the initial position of the actuation means, the upper edge (35), which is formed in the manner of a bevel, of the plunger (6) is arranged at least partially below an upper end (37) of the upper magnet coil (12a) and the lower end (39) of the plunger (6) is arranged below the lower end (43) of the upper magnet coil (12a) but above an upper end (41) of the lower magnet coil (12b).

8. Signal input apparatus according to Claim 6 or 7, **characterized in that**, with regard to a usage position in which a central axis (36) of the magnet coils (12a, 12b) is arranged substantially vertically and one magnet coil (12a) is an upper magnet coil and the other magnet coil (12b) is a lower magnet coil, in an actuated position of the actuation means which represents a maximum degree of actuation, the upper edge (35), which is formed in the manner of a bevel, of the plunger (6) is arranged at least partially above the lower end (43) of the upper magnet coil (12a) and the lower end (39) of the plunger (6) is arranged above the lower end (45) of the lower magnet coil (12b).

9. Signal input apparatus according to one of the preceding claims, **characterized in that** the housing (4, 32) is manufactured from an electrically conductive material.

10. Signal input apparatus according to one of the preceding claims, **characterized in that** the magnet coils (12a, 12b) are wound on at least one coil body (44) of the magnet coil arrangement (42).

**11.** Signal input apparatus according to Claim 10, **characterized in that** the at least one coil body (44) is composed of PBT (polybutylene terephthalate), of PPS (polyphenylene sulfide) or of POM (polyoxymethylene).

**12.** Signal input apparatus according to one of the preceding claims, **characterized in that** the magnet coil arrangement (42) is arranged axially between a guide body (38), which at least axially guides the plunger (6), and a housing section (60), and an axially acting spring arrangement (72) which is composed of paramagnetic material is arranged between the magnet coil arrangement (42) and the guide body (38).

**13.** Signal input apparatus according to one of the preceding claims, **characterized in that** the plunger (6) is formed at least partially by a slide (6) which is actuated by the actuation means.

**14.** Signal input apparatus according to one of the preceding claims, **characterized in that** the evaluation electronics (14) have at least two microprocessors (24a, 24b), wherein each resonant circuit (18a, 18b) is assigned a dedicated microprocessor (24a, 24b) which evaluates the associated resonant circuit signal (26a, 26b) or all resonant circuit signals (26a, 26b).

**15.** Signal input apparatus according to one of the preceding claims, **characterized in that** said signal input apparatus is part of a service pedal brake device or electropneumatic or electric brake device of a vehicle.

**16.** Electropneumatic or electric vehicle device of a vehicle, in particular service brake device or parking brake device comprising a signal input apparatus according to one of the preceding claims.

**17.** Vehicle device according to Claim 16, **characterized in that** said vehicle device is a parking brake device with a hand-operated or foot-operated device as signal input apparatus and with a foot-pedal-actuated or hand-actuated element as actuation means, a clutch device with a clutch pedal operating device as signal input apparatus and with a clutch foot pedal as actuation means, or an accelerator pedal device with an accelerator pedal operating device as signal input apparatus and with an accelerator foot pedal as actuation means.

**18.** Vehicle comprising an electropneumatic or electric vehicle device according to Claim 16 or 17.

**Revendications**

**1.** Système d'entrée de signaux électriques pour un véhicule, afin de produire un signal d'actionnement représentant un degré d'actionnement d'un organe d'actionnement, qui comporte au moins ce qui suit :

a) l'organe d'actionnement,
b) un dispositif capteur inductif, monté dans une enveloppe (4) et comprenant

b1) un agencement (42) de bobine d'électroaimant, comportant au moins une bobine (12a, 12b) d'électroaimant, dans laquelle passe un courant alternatif,
b2) au moins un plongeur (6), monté mobile dans l'enveloppe (4) et pouvant entrer dans la au moins une bobine (12a, 12b) d'électroaimant et en sortir, l'inductance (L) de la au moins une bobine (12a, 12b) d'électroaimant variant en fonction de la profondeur de pénétration du plongeur (6) dans la au moins une bobine (12a, 12b) d'électroaimant, ainsi que comprenant
b3) une électronique (14) d'exploitation en contact électrique avec la au moins une bobine (12a, 12b) d'électroaimant, dans lequel

c) le au moins un plongeur (6) est en liaison d'action avec l'organe d'actionnement, de manière à ce que la profondeur de pénétration du plongeur (6) dans la au moins une bobine (12a, 12b) d'électroaimant dépende d'un degré d'actionnement de l'organe d'actionnement, **caractérisé en ce que**
d) il est prévu au moins deux i bobines (12a, 12b) d'électroaimant disposées coaxialement l'une derrière l'autre, de manière à ce que, à l'actionnement de l'organe d'actionnement, à partir d'une position initiale représentant qu'il n'y a pas d'actionnement, en une position d'actionnement représentant un certain degré d'actionnement, le au moins un plongeur (65) sort, au moins en partie, de la bobine (12a) d'électroaimant et pénètre, au moins en partie, dans la bobine (12b) d'électroaimant faisant suite axialement à la une bobine (12a) d'électroaimant et **en ce que**
e) au moins deux des bobines (12a, 12b) d'électroaimant sont montées dans leur propre circuit (18a, 18b) oscillant fournissant un propre signal (26a, 26b) de circuit oscillant et
f) les au moins deux circuits (18a, 18b) oscillants et/ou le au moins un plongeur (6) est/sont constitué(s) de manière à ce que, au fur et à mesure que le degré d'actionnement de l'organe d'actionnement varie, le signal (26a, 26b) du un circuit (18a, 18b) oscillant diverge ou converge par rapport au signal (26a, 26b) de l'autre circuit (18a, 18b) oscillant,

dans lequel

g) l'électronique (14) d'exploitation produit le signal d'actionnement sur la base des signaux (26a, 26b) des au moins deux circuits (18a, 18b) oscillants.

2. Système d'entrée de signaux suivant la revendication 1, **caractérisé en ce que** les au moins deux circuits (18a, 18b) oscillants et/ou le au moins un plongeur (6) est/sont constitué(s) de manière à ce que les signaux (26a, 26b) des circuits (18a, 18b) oscillants ni ne se recoupent, ni ne se croisent.

3. Système d'entrée de signaux suivant l'une des revendications précédentes, **caractérisé en ce que** le tracé, divergent ou convergent, et/ou ne se recoupant pas ou ne se croisant pas, des signaux (26a, 26b) des au moins deux circuits (18a, 18b) oscillants, est atteint en fonction d'au moins un paramètre parmi les paramètres suivants : le nombre des spires des bobines (12a, 12b) d'électroaimant, le nombre des couches des spires des bobines (12a, 12b) d'électroaimant, la longueur du fil des bobines (12a, 12b) d'électroaimant, la capacité des condensateurs (20a, 20b) des circuits (18a, 18b) oscillants, le diamètre des bobines (12a, 12b) d'électroaimant, les longueurs axiales des bobines (12a, 12b) d'électroaimant, le contour ou le tracé de section transversale du au moins un plongeur (6).

4. Système d'entrée de signaux suivant l'une des revendications précédentes, **caractérisé en ce que** le signal (26a, 26b) de circuit oscillant repose sur l'inductance (L) de la bobine (12a, 12b) d'électroaimant, sur la fréquence (f), sur l'amplitude et/ou sur la période (T) du circuit (18a, 18b) oscillant.

5. Système d'entrée de signaux suivant l'une des revendications précédentes, **caractérisé en ce que** le plongeur (6) est conducteur de l'électricité et/ou ferromagnétique.

6. Système d'entrée de signaux suivant l'une des revendications précédentes, **caractérisé en ce que** le plongeur (6) a une surface extérieure, notamment de révolution, et un bord (35) de son extrémité, qui s'éloigne de l'autre bobine (12b) d'électroaimant, est constitué à la manière d'un biseau.

7. Système d'entrée de signaux suivant la revendication (6), **caractérisé en ce que**, rapporté à une position d'utilisation, dans laquelle un axe (36) médian des bobines (12a, 12b) d'électroaimant est sensiblement vertical et la une bobine (12a) d'électroaimant est une bobine d'électroaimant supérieure et l'autre bobine (12b) d'électroaimant, une bobine d'électroaimant inférieure, dans la position initiale de l'organe d'actionnement, le bord (35) supérieur, constitué à la manière d'un biseau du plongeur (6), est, au moins en partie, en dessous d'une extrémité (37) supérieure de la bobine (12a) d'électroaimant supérieure et l'extrémité (39) inférieure du plongeur (6) est en dessous de l'extrémité (43) inférieure de la bobine (12a) d'électroaimant supérieure, mais au-dessus d'une extrémité supérieure de la bobine (12b) d'électroaimant inférieure.

8. Système d'entrée de signaux suivant la revendication 6 ou 7, **caractérisé en ce que**, rapporté à une position d'utilisation dans laquelle un axe (36) médian des bobines (12a, 12b) d'électroaimant est sensiblement vertical et l'une des bobines (12a) d'électroaimant est une bobine d'électroaimant supérieure et l'autre bobine (12b) d'électroaimant est une bobine d'électroaimant inférieure, dans une position d'actionnement représentant un degré d'actionnement maximum de l'organe d'actionnement, le bord (35) supérieure, constitué à la manière d'un biseau, du plongeur (6) est, au moins en partie, au dessus de l'extrémité (43) inférieure de la bobine (12a) d'électroaimant supérieure et l'extrémité (39) inférieure du plongeur (6) est au-dessus de l'extrémité (45) inférieure de la bobine (12b) d'électroaimant inférieure.

9. Système d'entrée de signaux suivant l'une des revendications précédentes, **caractérisé en ce que** l'enveloppe (4, 32) est en un matériau conducteur de l'électricité.

10. Système d'entrée de signaux suivant l'une des revendications précédentes, **caractérisé en ce que** les bobines (12a, 12b) d'électroaimant sont enroulées sur au moins un corps (44) de bobine de l'agencement (42) de bobine d'électroaimant.

11. Système d'entrée de signaux suivant la revendication 10, **caractérisé en ce que** le au moins un corps (44) de bobine est en PBT (poly(téréphtalate de butylène)), en PPS (poly(sulfure de phénylène)) ou en POM (polyoxyméthylène).

12. Système d'entrée de signaux suivant l'une des revendications précédentes, **caractérisé en ce que** l'agencement (42) de bobine d'électroaimant est monté axialement entre une pièce (38) de guidage, guidant, au moins axialement, le plongeur (6) et une partie (60) de l'enveloppe et, entre l'agencement (42) de bobine d'électroaimant et la pièce (38) de guidage, est disposé un agencement (72) de ressort, qui est efficace axialement et qui est en un matériau paramagnétique.

13. Système d'entrée de signaux suivant l'une des revendications précédentes, **caractérisé en ce que** le plongeur (6) est formé, au moins en partie, d'un poussoir (6), qui est actionné par l'organe d'actionnement.

**14.** Système d'entrée de signaux suivant l'une des revendications précédentes, **caractérisé en ce que** l'électronique (14) d'exploitation a au moins deux microprocesseurs (24a, 24b), dans lequel, à chaque circuit (18a, 18b) oscillant, est associé son propre microprocesseur (24a, 24b), qui exploite le signal (26a, 26b) de circuit oscillant associé ou tous les signaux (26a, 26b) de circuit oscillant.

**15.** Système d'entrée de signaux suivant l'une des revendications précédentes, **caractérisé en ce qu'**il fait partie d'un dispositif de frein à pédale de service d'un dispositif de frein électropneumatique ou électrique d'un véhicule.

**16.** Dispositif électropneumatique ou électrique d'un véhicule, notamment dispositif de frein de service ou dispositif de frein de stationnement, comportant un système d'entrée de signaux suivant l'une des revendications précédentes.

**17.** Dispositif de véhicule suivant la revendication 16, **caractérisé en ce que** c'est un dispositif de frein de stationnement, ayant un dispositif de commande manuel ou au pied, comme système d'entrée de signaux, ainsi qu'un organe d'actionnement à pédale ou à main, comme organe d'actionnement, un dispositif d'embrayage ayant un dispositif de commande de pédale d'embrayage, comme système d'entrée de signaux, ainsi qu'une pédale d'embrayage, comme organe d'actionnement, ou un dispositif de service à pédale d'accélérateur, comme système d'entrée de signaux, ainsi qu'une pédale d'accélérateur, comme organe d'actionnement.

**18.** Véhicule comportant un dispositif de véhicule électropneumatique ou électrique suivant la revendication 16 ou 17.

FIG.1

FIG.2

EP 3 194 894 B1

FIG.3

FIG.4

18

FIG.5

FIG.6

**IN DER BESCHREIBUNG AUFGEFÜHRTE DOKUMENTE**

**In der Beschreibung aufgeführte Patentdokumente**

- DE 102007052162 A1
- DE 19852399 A1